# EUROPÄISCHE PATENTANMELDUNG

(11) **EP 0 552 628 A1**
(43) Veröffentlichungstag der Anmeldung: **28.07.1993**
(21) Anmeldenummer: 93100267.9
(22) Anmeldetag: 11.01.1993
(51) Int. Cl.: C08G 18/42, C08G 18/40, C08G 18/66, C08G 18/76, C08G 18/10, C08G 18/80

(54) **Verwendung von Reaktionsgemischen als Vergussmassen**

(30) Priorität: 22.01.1992 DE 4201608
(71) Anmelder: BAYER AG, 51368 Leverkusen (DE)
(72) Erfinder: Post, Udo, W-5060 Bergisch Gladbach 2 (DE); Knipp, Ulrich, Dr., W-5060 Bergisch Gladbach 2 (DE)

(57) **Zusammenfassung**

Die Verwendung von fließfähigen Reaktionsgemischen, bestehend im wesentlichen aus
A) einer Polyolkomponente, bestehend aus
   A1) mindestens einem linearen oder schwach verzweigten Polyesterpolyol der OH-Zahl 40 bis 500,
   A2) 0 bis 50 Gew.-%, bezogen auf A1), mindestens eines Polyetherpolyols der OH-Zahl 40 bis 500 und
   A3) 0 bis 5 Gew.-%, bezogen auf A1), mindestens eines niedermolekularen, mehrwertigen Alkohols einer über 500 liegenden OH-Zahl,
B) einer Polyisocyanatkomponente, bestehend aus einem bei Raumtemperatur flüssigen Polyisocyanatgemisch der Diphenylmethanreihe mit einem NCO-Gehalt von 10 bis 33 Gew.-% in einer solchen Menge, daß auf jede Hydroxylgruppe der Komponente A) 3 bis 20 NCO-Gruppen der Komponente B) entfallen,
C) Katalysatoren für Trimerisierungsreaktion von Isocyanatgruppen und gegebenenfalls
D) weiteren Hilfs- und Zusatzmitteln
als Vergußmassen.

## Beschreibung

Die Erfindung betrifft die Verwendung von speziellen, zu Estergruppen-aufweisenden Polyisocyanuraten ausreagierenden Reaktionsgemischen auf Polyisocyanat-Basis als Vergußmassen.

Vergußmassen auf Polyisocyanat-Basis, insbesondere nach dem Gießverfahren zu verarbeitende, zu Polyurethanen ausreagierende Reaktionsgemische sind seit langem bekannt (vgl. z.B. Kunststoff-Handbuch, Band VII "Polyurethane", Carl Hanser Verlag München (1966) Seiten 207 ff. bzw. 2. Auflage, Carl Hanser Verlag München/Wien (1983), Seiten 392 ff., insbesondere Seiten 410 - 428).

Es handelt sich bei diesen Systemen im wesentlichen um Reaktionsgemische aus einer Polyisocyanatkomponente und einer Polyolkomponente, die die üblichen Hilfs- und Zusatzmittel wie wasserabsorbierende Substanzen, Flammschutzmittel, Füllstoffe und dergleichen enthalten. Je nach Zusammensetzung der Gemische können diese für die unterschiedlichsten Einsatzgebiete verwendet werden, wie dies aus den oben zitierten Literaturstellen ersichtlich ist.

Die Polyolkomponente dieser Systeme besteht im allgemeinen aus Polyesterpolyolen oder Polyetherpolyolen, die jeweils ganz spezifische Vor- bzw. Nachteile aufweisen. So führen beispielsweise Polyurethangießharze auf Basis von Polyetherpolyolen zu Kunststoffen einer erhöhten Hydrolysebeständigkeit, jedoch einer im allgemeinen schlechteren Flammwidrigkeit, während analoge Systeme, auf Basis von Polyesterpolyolen, Kunststoffe mit verbesserten mechanischen Eigenschaften, verbesserter Flammwidrigkeit jedoch reduzierter Hydrolysebeständigkeit ergeben.

Es war daher die der Erfindung zugrundeliegende Aufgabe, neue Reaktivsysteme zur Verfügung zu stellen, die die Vorteile der bekannten Systeme in sich vereinen, ohne mit deren Nachteile behaftet zu sein.

Wie überraschend gefunden wurde, gelingt die Lösung dieser Aufgabe mit den nachstehend näher beschriebenen erfindungsgemäßen Systemen, bei denen unter Verwendung von ausgewählten Ausgangsmaterialien ein Polyisocyanat-Überschuß unter gleichzeitiger Mitverwendung von Trimerisierungskatalysatoren zur Anwendung gelangt, so daß als ausgehärtete Kunststoffe letztendlich Ester- und Urethan-Gruppen aufweisende Polyisocyanurate entstehen, die trotz der Mitverwendung von Polyesterpolyolen als Polyolkomponente eine ganz ausgezeichnete Hydrolysebeständigkeit bei sehr guten mechanischen Eigenschaften aufweisen.

Gegenstand der Erfindung ist die Verwendung fließfähigen Reaktionsgemischen, bestehend im wesentlichen aus
A) einer Polyolkomponente, bestehend aus
   A1) mindestens einem linearen oder schwach verzweigten Polyesterpolyol der OH-Zahl 40 bis 500 mg KOH/g,
   A2) 0 bis 50 Gew.-%, bezogen auf das Gewicht der Komponente A1) mindestens eines Polyetherpolyols der OH-Zahl 40 bis 500 mg KOH/g und
   A3) 0 bis 5 Gew.-%, bezogen auf das Gewicht der Komponente A1), mindestens eines niedermolekularen, mehrwertigen Alkohols einer über 500 mg KOH/g liegenden OH-Zahl,
B) einer Polyisocyanatkomponente, bestehend aus einem bei Raumtemperatur flüssigen Polyisocyanatgemisch der Diphenylmethanreihe mit einem NCO-Gehalt von 10 bis 33 Gew.-% in einer solchen Menge, daß auf jede Hydroxylgruppe der Komponente A) 3 bis 20 NCO-Gruppen der Komponente B) entfallen,
C) Katalysatoren für Trimerisierungsreaktion von Isocyanatgruppen und gegebenenfalls
D) weiteren an sich aus der Polyurethan-Gießharztechnologie bekannten Hilfs- und Zusatzmitteln
als Vergußmassen.

Bei der Komponente A) handelt es sich um A1) eine Polyesterpolyol-Komponente einer (mittleren) Hydroxylzahl von 40 - 500 mg KOH/g oder um ein Gemisch einer derartigen Polyesterpolyol-Komponente mit A2) einer Polyetherpolyol-Komponente einer (mittleren) OH-Zahl von 40 bis 500 mg KOH/g und/oder mit A3) niedermolekularen Polyolen einer über 500 liegenden Hydroxylzahl.

In der Polyolkomponente A) liegt die Komponente A2) in Mengen von 0 bis 50, vorzugsweise von 10 bis 30 Gew.-%, bezogen auf das Gewicht der Komponente A1) und die Komponente A3) in Mengen von 0 bis 5 Gew.-%, bezogen auf das Gewicht der Komponente A1) vor.

Die Polyesterpolyol-Komponente A1) weist bevorzugt eine Hydroxylzahl von 50 bis 300 mg KOH/g auf, die Säurezahl der Polyesterpolyol-Komponente A1) liegt im allgemeinen unter 5 mg KOH/g. Die Komponente A1) besteht aus mindestens einem linearen oder schwach verzweigten, hydroxygruppenaufweisenden Polyester. Lineare Polyesterdiole werden im allgemeinen bei Verwendung von ausschließlich difunktionellen Ausgangsmaterialien bei der Herstellung der Polyester erhalten.

"Schwach verzweigte" Polyesterpolyole sind im Rahmen der Erfindung solche, die aus Ausgangsmaterialien einer mittleren Funktionalität im Sinne der Esterbildungsreaktion von über 2 und bis zu 2,45, vorzugsweise bis zu 2,25, hergestellt worden sind.

Die Polyesterpolyole stellen an sich bekannte Kondensationsprodukte von mehrbasischen Säuren bzw. Anhydriden mehrbasischer Säuren mit überschüssigen Mengen an mehrwertigen Alkoholen dar. Als Ausgangsmaterialien in Betracht kommende mehrbasische Säuren bzw. Säureanhydride sind beispielsweise Adipinsäure, Phthalsäure, Phthalsäureanhydrid, Maleinsäure, Maleinsäureanhydrid, Tetrahydrophthalsäure, Tetrahydrophthalsäureanhydrid, Hexahydrophthalsäure, Hexahydrophthalsäureanhydrid beziehungsweise beliebige Gemische derartiger Verbindungen. Beispiele geeigneter mehrwertiger Alkohole sind beispielsweise Ethylenglykol, Propylenglykol, Butandiol-1,4, Butandiol-1,2, Hexandiol-1,6, Trimethylolpropan, Glycerin oder beliebige Gemische derartiger Verbindungen, soweit sie den obengenannten Bedingungen bezüglich der mittleren Funktionalität entsprechen.

Bei den gegebenenfalls mitzuverwendenden Polyetherpolyolen A2) handelt es sich um die an sich bekannten Anlagerungsprodukte von Alkylenoxiden an geeignete Startermoleküle, wobei als Alkylenoxide insbesondere Propylenoxid und Ethylenoxid, gegebenenfalls im Gemisch und/oder nacheinander und als Startermoleküle Wasser oder die soeben genannten einfachen, mehrwertigen Alkohole in Betracht kommen.

Geeignete niedermolekulare Polyole A3) sind insbesondere solche der zuletzt als Ausgangsmaterialien für die Herstellung der Polyesterpolyole genannten, einfachen mehrwertigen Alkohole oder deren niedermolekulare Alkoxylierungsprodukte, soweit sie den oben gemachten Angaben bezüglich der Hydroxylzahl entsprechen.

Bei der Polyisocyanatkomponente B) handelt es sich insbesondere um bei Raumtemperatur flüssige, gegebenenfalls chemisch modifizierte, Polyisocyanatgemische der Diphenylmethanreihe mit einem NCO-Gehalt von 10 bis 33, vorzugsweise 20 bis 33 Gew.-%. Hierzu gehören beispielsweise bei Raumtemperatur flüssige Gemische aus 4,4'- und 2,4'-Diisocyanatodiphenylmethan, die gegebenenfalls in Abmischung mit geringen Mengen an 2,2'-Diisocyanatdiphenylmethan und/oder mit höheren Homologen dieser Diisocyanate mit mehr als 2 Isocyanatgruppen pro Molekül vorliegen können. Geeignet sind auch durch chemische Modifizierung, beispielsweise durch Carbodiimidisierung eines Teils der Isocyanatgruppen oder durch Urethanisierung mit mehrwertigen Alkoholen, insbesondere mit Polypropylenglykolen mit einem maximalen Molekulargewicht von 2.000, vorzugsweise von 700, und insbesondere mit Di- und/oder Tripropylenglykol modifizierten Polyisocyanate oder Polyisocyanatgemische der Diphenylmethanreihe, soweit sie den gemachten Angaben bezüglich des Isocyanatgehaltes entsprechen.

Bei den Trimerisierungskatalysatoren C) handelt es sich um an sich bekannte Verbindungen wie beispielsweise Alkaliacetate insbesondere Kaliumacetat oder Manichbasen auf Basis von Phenolen, Dimethylamin und Formaldehyd.

Besonders bevorzugt werden Alkaliacetate, insbesondere Kaliumacetat als Trimerisierungskatalysator verwendet.

Weitere gegebenenfalls mit zu verwendende, an sich bekannte Hilfsmittel D) sind beispielsweise wasserabsorbierende Substanzen (Zeolithe), die oftmals in Mengen von 1 bis 10 Gew.-Teilen, bezogen auf 100 Gew.-Teile Polyol A) mitverwendet werden; das Brandverhalten günstig beeinflußende Zusatzmittel, wie beispielsweise Aluminiumhydroxid oder Flammschutzmittel auf Phosphatbasis wie beispielsweise Ammoniumpolyphosphat.

In den erfindungsgemäß zu verwendenden Gießharzen liegen die genannten Ausgangskomponenten in solchen Mengen vor, daß auf jede gegenüber Isocyanatgruppen reaktionsfähige Gruppe 3 bis 20, vorzugsweise 6 bis 15 Isocyanatgruppen entfallen (NCO-Kennzahlen von 300 bis 2.000, vorzugsweise von 600 bis 1500).

Mit den erfindungsgemäß zu verwendenden Gießharzen hergestellten Kunststoffe zeichnen sich durch eine ausgezeichnete Wärmestabilität aus. Besonders überraschend ist jedoch ihre extrem hohe Hydrolysenstabilität, die für Polyurethane auf Polyesterbasis völlig ungewöhnlich ist. Obwohl im allgemeinen Hydrolyseschutzmittel wie z.B. Carbodiimide nicht mitverwendet werden, weisen die aus den erfindungsgemäß zu verwendenden Gießharze hergestellten Kunststoffe selbst nach einmonatiger Lagerung in kochendem Wasser keine nennenswerten Anzeichen für einen hydrolytischen Abbau auf.

Die ausgezeichnete Chemikalienbeständigkeit der Kunststoffe zeigt sich auch in ihrer Resistenz gegenüber verdünnten Säuren, wie beispielsweise verdünnter Salzsäure, verdünnter Schwefelsäure oder verdünnter Salpetersäure, wie sie in agressiven Abgasen oftmals enthalten sind.

In den Beispielen beziehen sich alle Prozentangaben auf das Gewicht.

### Beispiel 1

### Polyolgemisch:

Polyol-Mischung mit der OH-Zahl 85 und einer Viskosität bei 25°C von ca. 2.300 mPa·s, bestehend aus
- 70 Gew.-Tlen: eines Polyesters der OH-Zahl 55, welcher durch Polykondensation von
1,85 Mol Adipinsäure
1,00 Mol Butandiol-1,4
1,00 Mol Ethylenglykol
erhalten wurde,
- 30 Gew.-Tlen: eines Polyethers der OH-Zahl 150, hergestellt durch Propoxylierung von Propylenglykol und anschließende Ethoxylierung des Propoxylierungsprodukts (PO:EO-Gewichtsverhältnis = 87:13),
- 3 Gew.-Tlen: einer 25 %igen Lösung von Kaliumacetat in Diethylenglykol,
- 120 Gew.-Tlen: Aluminiumhydroxid,
- 40 Gew.-Tlen: Ammoniumpolyphosphat.

### Polyisocyanatgemisch:

Ein Polyisocyanatgemisch mit einem NCO-Gehalt von 28 % und einer Viskosität bei 25°C von 300 mPa·s bestehend aus
- 100 Gew.-Tlen: eines Semiprepolymers, welches durch Umsetzung von (i) 100 Gew.-Tlen eines Gemisches aus 80 Gew.-Tlen 4,4'-Diisocyanatodiphenylmethan, 10 Gew.-Tlen tri- und höherfunktionellen Polyisocyanaten der Diphenylmethanreihe mit (ii) 12,5 Gew.-Tlen Polypropylenglykol der OH-Zahl 485 erhalten wurde, mit einem NCO-Gehalt von 24,5 % und
- 100 Gew.-Tlen: eines Polyisocyanates, das durch Phosgenierung von Anilin-Formaldehyd-Kondensaten hergestellt wurde und einen NCO-Gehalt von 31,5 % und eine Viskosität bei 25°C von 60 mPa·s aufweist.

Zur Herstellung eines gebrauchsfertigen, erfindungsgemäß zu verwendenden Gießharz werden 263 Gew.-Tle der Polyolmischung mit 300 Gew.-Tlen des Polyisocyanats vermischt (NCO-Kennzahl = 1.200). Außerdem werden dem Gemisch 10 Gew.-Tle einer Paste aus 50 % Na/K-Alumosilikat und 50 % Rizinusöl, 300 Gew.-Tle Aluminiumhydroxid und 75 Gew.-Tle Ammoniumphosphat einverleibt.

Es resultiert ein erfindungsgemäß zu verwendendes Gießharz, welches auf den üblichen Maschinen der Gießharztechnologie verarbeitbar ist. Bei einer Herstellung der Mischung unter Verwendung von Ausgangskomponenten, die auf 45°C vorgewärmt sind, und Verwendung des Gemischs zum Befüllen von Werkzeugen, die auf 75°C gehalten werden, resultiert eine Abbindezeit von 40 sek bei einer Entformungszeit (5 bis 100 mm Wanddicke) von 1 bis 5 Minuten. Hervorzuheben ist dabei die vergleichsweise kurze Entformungszeit bei großen Wanddicken.

### Hydrolysetest

Ein als Prüfplatte vorliegender Formkörper (Abmessungen: 100 x 50 x 10 mm) wurde in kochendes Wasser gelegt und nach Abkühlung auf Raumtemperatur (23°C) die SHORE-D-Härte gemessen:

| Kochzeit | Shore-D-Härte |
|---|---|
| 0 | 89 |
| 8 Stunden | 82 |
| 7 Tage | 82 |
| 14 Tage | 82 |
| 4 Wochen | 82 |

### Mechanische Eigenschaften:

| | | |
|---|---|---|
| Dichte | g/cm³ | 1,662 |
| Biegefestigkeit | MPa | 73 |
| E_{B}-Modul | MPa | 6440 |
| Zugfestigkeit | MPa | 47 |
| Bruchdehnung | % | 1,5 |
| E_{Z}-Modul | MPa | 5640 |
| Wärmebiegefestigkeit | °C | 180 |
| Schlagzähigkeit | kJ/m² | |
| + 23°C | | 9 |
| - 20°C | | 8 |
| Schwindung | % | 0,55 |
| Ausdehnungskoeffizient | (m/m·K)·10⁻⁶ | 75 |
| Wärmeleitzahl | W/K·m | - |
| Shore-D-Härte | | 89 |
| Brandschachttest | | B 1 schwer |
| nach DIN 4102 | | entflammbar |

### Säurelagerung

Lagerung von Prüfkörpern in einer mit Wasser verdünnten Säuremischung bestehend aus: Salzsäure, Schwefelsäure, Salpetersäure (pH-Wert der Mischung ca. 2) bei 23°C und 90°C.

Anschließend Prüfung im Zugversuch und Schlagtest.

Gießharz gemäß Beispiel 1, 3 Monate Lagerung in Säuremischung

| | | 23°C | 90°C |
|---|---|---|---|
| Zugfestigkeit | MPa | 23 | 20 |
| Bruchdehnung | % | 3 | 3,5 |
| E-Modul | MPa | 2940 | 1790 |
| Schlagbiegefestigkeit | kJ/m² | 13 | 9 |
| (Prüfung erfolgte an nicht getrockneten Prüfkörpern) | | | |

### Beispiel 2

Entsprechend Beispiel 1 wurde ein nicht-gefülltes Gießharz aus folgenden Ausgangsmaterialien hergestellt:
- 70 Gew.-Tle: des Polyesters gemäß Beispiel 1
- 30 Gew.-Tle: des Polyethers gemäß Beispiel 1
- 3 Gew.-Tle: der Kaliumacetatlösung gemäß Beispiel 1
- 200 Gew.-Tle: Polyisocyanat gemäß Beispiel 1 (NCO-Kennzahl = 800)
Die Verarbeitung des Gießharzes erfolgte entsprechend Beispiel 1. Es resultierte ein Formkörper mit folgenden Eigenschaften:

| | | |
|---|---|---|
| Dichte | g/cm³ | 1,240 |
| Biegefestigkeit | MPa | 115 |
| E_{B}-Modul | MPa | 2650 |
| Zugfestigkeit | MPa | 74 |
| Bruchdehnung | % | 6 |
| E_{Z}-Modul | MPa | 2150 |
| Wärmebiegefest. | °C | 205 |
| Schlagzähigkeit | kJ/m² | |
| + 23°C | | 36 |
| - 20°C | | 38 |
| Schwindung | % | 1,70 |
| Ausdehnungskoeffizient | (m/m·K)·10⁻⁶ | 160 |
| Wärmeleitzahl | W/K·m | 0,250 |
| Shore-D-Härte | | 83 |

Der resultierende Formkörper erwies als gegenüber kochendem Wasser völlig inert. Die Vorhärte blieb nach vierwöchiger Einwirkung von kochendem Wasser unverändert (83).

### Beispiel 3

- 150 Gew.-Tle: des Polyisocyanats aus Beispiel 1 werden mit
- 103,5 Gew.-Tle: einer Polyolmischung der OH-Zahl 170 und einer Viskosität bei 25°C von 2.600 mPa·s zu einem gebrauchsfertigen erfindungsgemäßen Gießharz abgemischt (NCO-Kennzahl = 330).

Bei der Polyolmischung handelt es sich um eine Mischung aus
- 70 Gew.-Tle: eines Polyesters der OH-Zahl 165, welcher durch Polykondensation von
0,90 Mol Adipinsäure
0,09 Mol Phthalsäureanhydrid
0,01 Mol Maleinsäureanhydrid
1,13 Mol Propylenglykol-1,2
0,22 Mol Trimethylolpropan
erhalten wurde.
- 30 Gew.-Tle: des Polyethers der OH-Zahl 150 aus Beispiel 1,
- 2-5 Gew.-Tle: einer Lösung von Kaliumacetat in Diethylenglykol.

Das so hergestellte Gießharz weist bei 25°C eine Topfzeit von 30-120 Sekunden auf und härtet zu einem Kunststoff aus, der bezüglich seiner mechanischen und chemischen Eigenschaften dem Kunststoff gemäß Beispiel 2 vergleichbar ist.

Durch Erhöhung der Polyisocyanatmenge (beispielsweise auf 400 Gew.-Tle, entsprechend einer NCO-Kennzahl von 870) unter gleichzeitiger Erhöhung der Menge des Trimerisierungskatalysators (5 Gew.-Tle der Kaliumacetatlösung) wird ein erfindungsgemäßes Gießharz erhalten, welches sich insbesondere durch eine erhöhte Härte der resultierenden Formkörper auszeichnet.

### Beispiel 4

Eine weitere Polyolmischung (OH-Zahl = 205, Viskosität (25°C) = 3500 mPa·s), die zur Herstellung von erfindungsgemäßem Gießharz in Kombination mit dem Polyisocyanat gemäß Beispiel 1 geeignet ist, wird erhalten durch Abmischung von
- 70 Gew.-Tle: eines Polyesters der OH-Zahl 215, welcher durch Polykondensation von
0,94 Mol Adipinsäure
0,05 Mol Phhthalsäureanhydrid
0,01 Mol Maleinsäureanhydrid
0,92 Mol Propylenglykol-1,2
0,42 Mol Trimethylolpropan
erhalten wurde
- 30 Gew.-Tle: eines Polyethers der OH-Zahl 150 aus Beispiel 1,
- 2-5 Gew.-Tle: einer Lösung von Kaliumacetat in Diethylenglykol.

### Beispiel 5

Ein katalysiertes Polyesterpolyol, welches zur Herstellung von erfindungsgemäßen Gießharzen in Kombination mit dem Polyisocyanat gemäß Beispiel 1 geeignet ist, weist eine OH-Zahl von 60 und eine Viskosität (40°C) von 3.300 mPa·s auf. Es besteht aus
- 100 Gew.-Tle: eines Polyesters der OH-Zahl 55, welcher durch Polykondensation von
1,85 Mol Adipinsäure
1,00 Mol Butandiol-1,4
1,00 Mol Ethylenglykol
erhalten wurde.
- 1,5-3 Gew.-Tle: einer Lösung von Alkaliacetat in Diethylenglykol

## Patentansprüche

1. Verwendung fließfähigen Reaktionsgemischen, bestehend im wesentlichen aus
A) einer Polyolkomponente, bestehend aus
A1) mindestens einem linearen oder schwach verzweigten Polyesterpolyol der OH-Zahl 40 bis 500 mg KOH/g,
A2) 0 bis 50 Gew.-%, bezogen auf das Gewicht der Komponente A1) mindestens eines Polyetherpolyols der OH-Zahl 40 bis 500 mg KOH/g und
A3) 0 bis 5 Gew.-%, bezogen auf das Gewicht der Komponente A1), mindestens eines niedermolekularen, mehrwertigen Alkohols einer über 500 mg KOH/g liegenden OH-Zahl,
B) einer Polyisocyanatkomponente, bestehend aus einem bei Raumtemperatur flüssigen Polyisocyanatgemisch der Diphenylmethanreihe mit einem NCO-Gehalt von 10 bis 33 Gew.-% in einer solchen Menge, daß auf jede Hydroxylgruppe der Komponente A) 3 bis 20 NCO-Gruppen der Komponente B) entfallen,
c) Katalysatoren für Trimerisierungsreaktion von Isocyanatgruppen und gegebenenfalls
D) weiteren an sich aus der Polyurethan-Gießharztechnologie bekannten Hilfs- und Zusatzmitteln
als Vergußmassen.

2. Verwendung gemäß Anspruch 1, dadurch gekennzeichnet, daß man die Katalysatoren C) in einer Menge von 0,1 bis 10 Gew.-%, bezogen auf die Komponente A) einsetzt.

3. Verwendung gemäß Anspruch 1 und 2, dadurch gekennzeichnet, daß man als Zusatzmaterialien D) wasserabsorbierende Substanzen und/oder Flammschutzmittel, gegebenenfalls zusammen mit weiteren Hilfs- und Zusatzmitteln einsetzt.
